# EUROPEAN PATENT APPLICATION

(11) **EP 2 814 046 A2**
(43) Date of publication of application: **17.12.2014**
(21) Application number: 14169629.4
(22) Date of filing: 23.05.2014
(51) Int. Cl.: H01F 27/36, H01F 38/14

(54) **Leakage preventing device of electromagnetic wave**

(30) Priority: 11.06.2013 JP 2013122831
(71) Applicant: Kabushiki Kaisha Toshiba, Tokyo (JP)
(72) Inventor: Obayashi, Shuichi, Tokyo (JP); Shijo, Tetsu, Tokyo (JP); Higaki, Makoto, Tokyo (JP)
(74) Representative: Hoffmann Eitle

(57) **Abstract**

There is provided a leakage preventing device of electromagnetic wave for a first resonator to perform wireless power transmission with a second resonator. A first conductor plate is provided on a first side of the first resonator, the first side being an opposite side of a second side where the first resonator is opposed to the second resonator. First and second conductive objects are connectable to the first conductor plate at first ends and electrically connectable to a second conductor plate at a second ends respectively. The second conductor plate is provided on a third side of the second resonator. The third side of the second resonator is an opposite side of a fourth side of the second resonator where the second resonator is opposed to the first resonator. The first and second conductive objects form a conductive loop together with the first conductor plate and the second conductor plate.

## Description

### FIELD

An embodiment described herein relates to a leakage preventing device of electromagnetic wave.

### BACKGROUND

Conventionally, a wireless power transmitting system which performs non-contact charging using a transmission/reception antenna of microwaves of 2.45 GHz for instance is known. The system includes a transmission antenna which outputs microwaves from an output surface, a reception antenna which is disposed at a position opposed to the output surface during transmission and receives the microwaves outputted by the transmission antenna on an input surface, and a shield part which electromagnetically shields a space between the transmission antenna and the reception antenna from the outside. The shield part is configured as the one for which a brush-like conductive object formed by bundling many wire-like or rod-like conductors is disposed in an area surrounding the output surface of the transmission antenna.

Also, as a different wireless power transmitting system, the one in which a coil spring for shielding electric waves is attached so as to surround the transmission antenna instead of the brush-like conductive object for the intention of more surely preventing leakage of microwaves is known.

However, in the case of a non-contact charging device using a frequency of a long wave band of 10-200 kHz for instance, even if shielding is performed simply with a conductive brush or a coil spring or the like, when there is a gap by recesses and projections under a vehicle body or a dielectric layer by a plastic casing, electromagnetic waves leak.

In a non-contact charging device in which about 100 kHz is a transmission frequency and non-contact power supply is performed between upper and lower resonators, a magnetic field distribution in the case of providing a metal plate respectively on the upper resonator and under the lower resonator and surrounding the upper and lower resonators by a metal shield having a cross section of a square-shaped ring further is considered. It is assumed that there is no gap between the lower metal plate and the metal shield but there is a gap of 5 mm between the upper metal plate and the metal shield. The surrounding magnetic field distribution in this case becomes the magnetic field distribution with a small difference compared to the case that there is no metal shield having the cross section of the square-shaped ring. For instance, at the position of 2 m to the left from the center of the resonator, a magnetic field in the case that there is the metal shield has the reduction effect of about one third of the magnetic field in the case that there is no metal shield, that is a little less than -10 dB.

In such a manner, a conventional technology has a problem that electromagnetic waves leak when there is a gap by recesses and projections under a vehicle body or a dielectric layer by a plastic casing.

### BRIEF DESCRIPTION OF THE DRAWINGS

FIG. 1 illustrates an electromagnetic leakage preventing device according to a first embodiment;
FIG. 2 illustrates an electromagnetic leakage preventing device according to a second embodiment;
FIG. 3 illustrates an electromagnetic leakage preventing device according to a third embodiment;
FIG. 4 illustrates a simulation result of a magnetic field leakage preventing effect by the second embodiment;
FIG. 5 illustrates an electromagnetic leakage preventing device according to a fourth embodiment;
FIG. 6 illustrates an electromagnetic leakage preventing device according to a fifth embodiment;
FIG. 7A illustrates an electromagnetic leakage preventing device according to a six embodiment;
FIG. 7B illustrates the electromagnetic leakage preventing device according to the sixth embodiment;
FIG. 8A illustrates an electromagnetic leakage preventing device according to a seventh embodiment;
FIG. 8B illustrates the electromagnetic leakage preventing device according to the seventh embodiment;
FIG. 9A illustrates an electromagnetic leakage preventing device according to an eighth embodiment;
FIG 9B illustrates the electromagnetic leakage preventing device according to the eighth embodiment;
FIG. 10 illustrates an electromagnetic leakage preventing device according to a ninth embodiment;
FIG. 11 illustrates an electromagnetic leakage preventing device according to a tenth embodiment; and
FIG. 12 illustrates an electromagnetic leakage preventing device according to an eleventh embodiment.

### DETAILED DESCRIPTION

According to one embodiment, there is provided a leakage preventing device of electromagnetic wave for a first resonator to perform wireless power transmission with a second resonator disposed so as to be opposed to the first resonator, the first resonator including a first magnetic material and a first coil wound around the first magnetic material. The leakage preventing device includes: a first conductor plate and first and second conductive objects.

The first conductor plate is provided on a first side of the first resonator, the first side being an opposite side of a second side of the first conductor plate where the first resonator is opposed to the second resonator.

The first and second conductive objects are electrically connectable to the first conductor plate at first ends and be electrically connectable to a second conductor plate at second ends respectively. The second conductor plate is provided on a third side of the second resonator. The third side is an opposite side of a fourth side of the second resonator where the second resonator is opposed to the first resonator. The first and second conductive objects form a conductive loop surrounding a periphery of the first and second resonators together with the first conductor plate and the second conductor plate, when the first ends are electrically connected to the first conductor plate and the second ends are electrically connected to the second conductor plate.

The embodiment of the present invention relate to a leakage preventing device which prevents electromagnetic wave leakage to the surroundings when performing wireless power transmission between a primary resonator and a secondary resonator. This leakage preventing device is suitable when used to prevent leakage of electromagnetic waves to the surroundings in the case of performing wireless power transmission for non-contact charging using a primary resonator installed to a parking surface and a secondary resonator installed at the lower part of a vehicle such as an electric automobile, for instance. The embodiments of the present invention are applicable also to leakage prevention of electromagnetic waves when performing wireless power transmission to various kinds of electric devices operated by a battery charger, in addition to a moving body such as an electric automobile or a train.

Hereinafter, the embodiments of the present invention will be described with reference to drawings.

### (First embodiment)

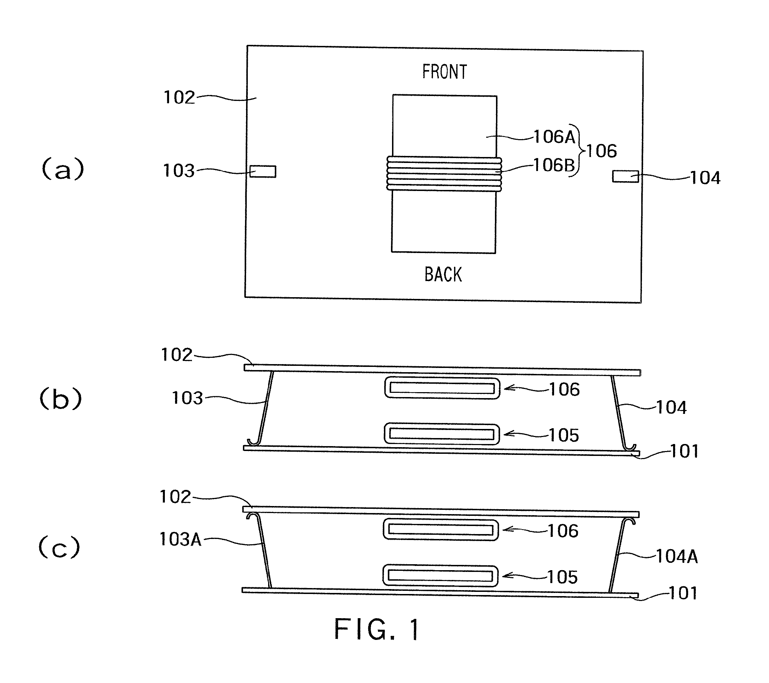

FIG. 1(a) illustrates a top view of a wireless power transmitting device (secondary transmitting device) including a leakage preventing device according to a first embodiment and a secondary resonator. FIG. 1(b) illustrates a front view for the time when a wireless power transmitting device (primary transmitting device) including a primary resonator is made to be opposed to the wireless power transmitting device in FIG 1(a).

This leakage preventing device includes a conductor plate 102 and conductive objects 103 and 104. In this example, the conductive objects 103 and 104 have the form of a conductive wire.

A secondary resonator 106 includes a magnetic core 106A, and a transmission coil 106B wound around the magnetic core 106A. The magnetic core 106A has an approximately flat shape. The transmission coil 106B has an approximately flat upper cross section.

The conductor plate 102 is disposed on the back surface side of the secondary resonator 106, that is, on the opposite side of the side where the secondary resonator 106 is opposed to a primary resonator 105.

The conductive wire 103 is disposed away from the secondary resonator 106 in a direction parallel to a width direction of the coil 106B. One end of the conductive wire 103 is connected to the conductor plate 102, and the other end of the conductive wire 103 is electrically connectable and separable to/from a conductive plate 101 by being brought into contact or non-contact with the surface of the conductive plate 101. The other end is curved in a J shape at one end and is to be in contact with the conductive plate 101 at the curve part. In FIG. 1(b), a connected state is illustrated.

The conductive wire 104 is disposed away from the secondary resonator 106 in a direction approximately opposite to the conductive wire 103. Between the conductive wires 104 and 103, the secondary resonator 106 is positioned. One end of the conductive wire 104 is connected to the conductor plate 102, and the other end is electrically connectable and separable to/from the conductive plate 101 by being brought into contact or non-contact with the surface of the conductive plate 101. The other end is curved in a J shape at one end and is to be in contact with the conductive plate 101 at the curve part. In FIG. 1(b), the connected state is illustrated. Also, the other ends of the conductive wires 103 and 104 are in the form of being suspended from the conductive plate 102 on the upper side.

While one end of the conductive wires 103 and 104 is fixedly connected to the conductive plate 102 in FIG. 1(b), however, a connectable and separable configuration may be adapted as well. Also, the conductive wires 103 and 104 may be disposed approximately in parallel to the conductive plate 102 and turned to the state that both ends are released in non-use (when not performing the wireless power transmission) and turned to the form that the other end is suspended from the conductive plate 102 and one end is automatically connected to the conductor plate 102 as in FIG. 1(b) in use.

The primary resonator 105 includes a magnetic core 105A, and a reception coil 105B wound around the magnetic core 105A. The magnetic core 105A has an approximately flat shape. The reception coil 105B has an approximately flat upper cross section. By the magnetic cores 105A and 106A disposed at the center of the respective coils of the primary resonator 105 and the secondary resonator 106, a coupling coefficient between the resonators can be increased during the wireless power transmission.

Since the other ends of the conductive wires 103 and 104 are connected to the conductive plate 101 on the primary side, a conductive loop is formed so as to surround a resonator pair by the conductive wires 103 and 104 and the conductive plates 101 and 102. The conductive loop surrounds the entire resonator pair so as to go around the left, right, up and down of the resonator pair along a paper surface of FIG. 1(b). In an illustrated example, the conductive loop is approximately parallel to a winding direction of the coils 106B and 105B. However, being parallel is not essential. By the conductive loop, the leakage of the electromagnetic waves to the surroundings is reduced during the wireless power transmission from the primary side to the secondary side.

The reason is that, during the wireless power transmission, magnetic fluxes are generated mainly longitudinally and vertically between the upper and lower resonators, and when the magnetic fluxes move to and from the upper and lower resonators in an unbalanced manner, an induced current corresponding to a magnetic flux density for the unbalance flows to the conductive loop, and functions to cancel the magnetic fluxes for the unbalance.

It is said generally that there is no effective absorber for the frequency of the long wave band of 10-200 kHz. In such a low frequency magnetic area (near field), generally two important magnetic shield methods are the use of a high permeability ferromagnetic material (ferrite or the like) which changes the flow of the magnetic fluxes, and the use of a short-circuit loop which generates a magnetic field in an opposite direction. In this embodiment, attention is paid especially to the short-circuit loop, and the short-circuit loop is easily configured at a part distant from the resonator pair, where there is little influence on the wireless power transmission. Therefore, effective magnetic shielding is made possible, and the leakage of the electromagnetic waves to the surroundings is prevented.

While the conductive wire is installed to the secondary conductor plate 102 in FIG. 1(a) and FIG. 1(b), conductive wires 103A and 104A may be installed to the primary conductor plate 101 as illustrated in FIG. 1(c).

In this case, one end of the conductive wires 103A and 104A is connected to the conductor plate 101, and the other end is electrically connectable and separable to/from the conductor plate 102. Specifically, when a secondary transmitting device is oppositely disposed during the wireless power transmission, the other end of the conductive wires 103A and 104A is electrically connected to the secondary conductive plate 102. The state at the time is illustrated in FIG. 1(c). The conductive wires 103A and 104A are in the form of rising from the conductive plate 101 on the lower side. In such a manner, even when the conductive wire is formed on the primary conductive plate, since a conductive loop is formed around the resonator pair, a magnetic shielding is effectively formed, and the leakage of the electromagnetic waves to the surroundings is prevented.

While one end of the conductive wire 103 is connected to a surface on the side opposed to the conductor plate 102 of the conductor plate 101 in the example illustrated in FIG. 1(b), the configuration of being connected to a surface on the opposite side is also possible. For instance, a small hole may be formed on the conductor plate 101, one end of the conductive wire 103 may be made to pass through the hole and one end of a J-shape may be brought into contact with the surface on the opposite side. An oblong hole may be formed in accordance with the width of a J shape and the thickness of the wire, and the wire may be made to pass through the hole and then rotated by 90 degrees around an axis or the like so that the wire is prevented from easily getting off. The conductive wire 104 may be configured similarly to the conductive wire 103.

### (Second embodiment)

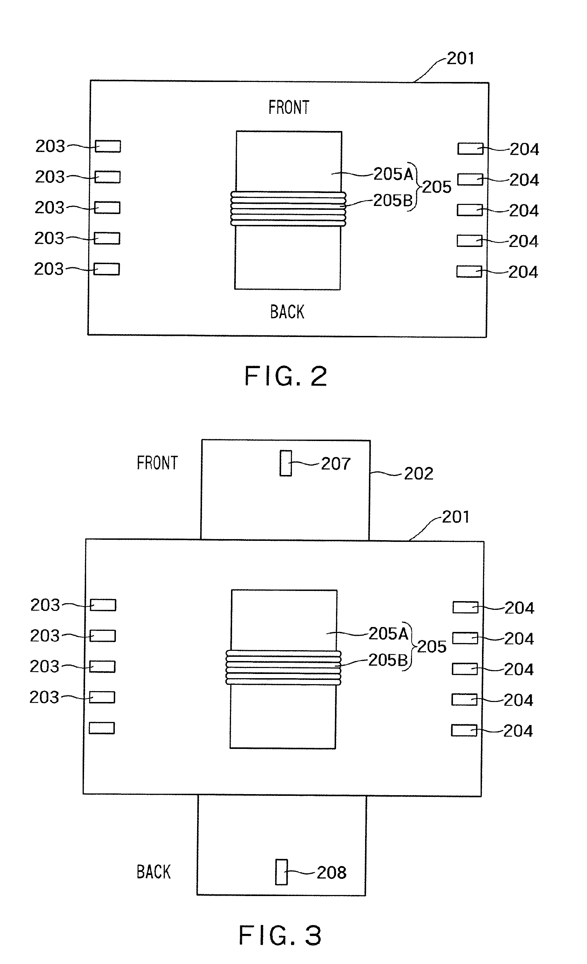

FIG. 2 illustrates a wireless power transmitting device including a leakage preventing device according to a second embodiment and a resonator. The resonator may be either primary resonator or secondary resonator.

To a resonator 205 including a magnetic core 205A and a coil 205B, the leakage preventing device is disposed. The leakage preventing device includes a conductor plate 201 and a set of a plurality of conductive wires 203 and 204 whose one end is connected to the conductor plate 201. The other end of them is brought into contact with the conductor plate on a back surface of the resonator that is arranged oppositely during power transmission and is electrically connected with the conductor plate. Thus, during the power transmission, a plurality of short-circuit loops are formed at different parts in a longitudinal direction. Therefore, there is a function of canceling the magnetic fluxes for the unbalance at different locations in the longitudinal direction, and a leakage magnetic field to the surroundings can be reduced more.

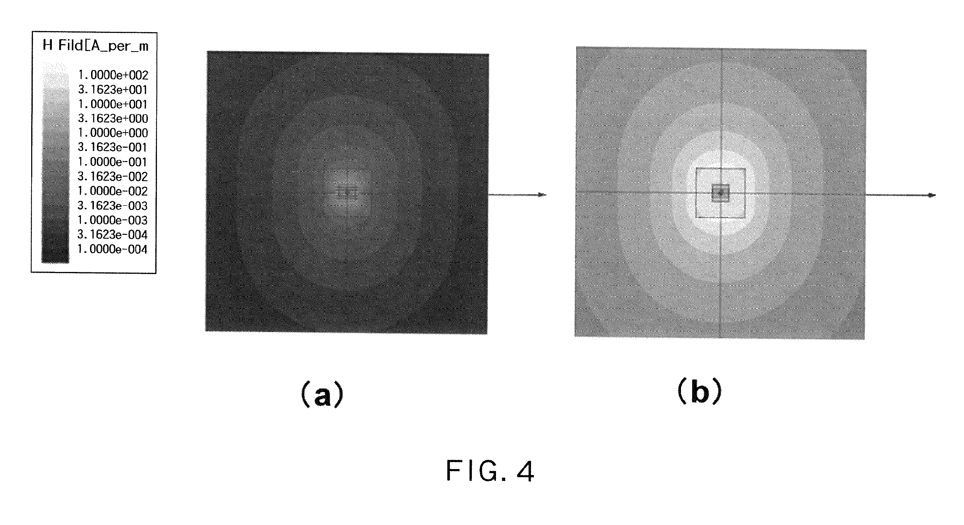

Using FIG. 4, a simulation result indicating a magnetic field leakage preventing effect by the second embodiment will be described. FIG. 4(a) illustrates a simulation result by a configuration of the second embodiment. Five loops are disposed at the interval of 10 cm. FIG. 4(b) illustrates a simulation result by a configuration (conventional configuration) for which all the conductive wires 203 and 204 are removed from the configuration in FIG. 2. In the conventional configuration, the conductive loop is not formed.

As illustrated in FIG. 4(a), when five loops are disposed at the interval of 10 cm, the surrounding magnetic field can be reduced greatly. For instance, at the position of 2 m to the left from the center of the resonator, the magnetic field in FIG. 4(a) can obtain the reduction effect of about 1/20 of the magnetic field in FIG. 4(b), that is -26 dB.

Also, as a related technology, a configuration of disposing a conductive brush and a coil spring densely so as to surround a resonator pair is known. It is forming a sealed space around the resonator pair by respective metal wires configuring the conductive brush and the respective coil springs, and prevents the leakage of the electromagnetic waves. Only when the condition that the respective metal wires and the respective coil springs are brought into electric contact with both metal plates disposed above and below the resonator pair is satisfied, a magnetic shielding effect is generated. In the configuration, the conductive brush and the coil spring have to be densely disposed, causing problems of weight increase and cost increase. Also, in terms of the configuration, a gap from the metal plate tends to be generated. In contrast, in this embodiment, there is no need of densely disposing the conductive loops, and a gap from the conductive plate is not easily generated. Therefore, a high shielding effect can be obtained with few loops even when they are sparsely disposed. Also, this effect can be obtained similarly in the first embodiment as well.

### (Third embodiment)

FIG. 3 illustrates a wireless power transmitting device including a leakage preventing device according to a third embodiment and a resonator. The resonator may be either primary resonator or secondary resonator. The same symbols are attached for the parts similar to FIG. 2 and redundant descriptions are omitted.

The conductive plate 202 is provided on a back surface side (a back side toward the paper surface) of the conductive plate 201. The conductive plate 202 may be formed integrally with the conductive plate 201 or may be provided on a front surface side (a front side toward the paper surface) of the conductive plate 201.

In a direction parallel to a length direction (longitudinal direction) of the coil 205B of the resonator 205, a conductive object 207 is disposed away from the resonator 205. A conductive object 208 is disposed away from the resonator 205 in a direction approximately opposite to the conductive object 207. One end of the conductive objects 207 and 208 is connected to the conductive plate 202, and the other end of the conductive objects 207 and 208 is brought into contact with the conductor plate on the back surface side of the resonator that is arranged to be opposed to the resonator 205 during the power transmission and is electrically connected with the conductor plate. Thus, a loop that goes around in a vertical direction (longitudinal direction) along the paper surface is formed. The loop is approximately perpendicular to the five loops formed by the conductor wires 203 and 204.

During the power transmission, the magnetic fluxes in the opposite direction and the longitudinal direction of the pair of the upper and lower resonators are generated. During the power transmission, especially when positions in all directions of the upper and lower resonators are shifted or when the arrangement or the like of objects around the upper and lower resonators is not symmetrical, the unbalance of the magnetic fluxes in a horizontal direction is generated. At the time, the loop in the longitudinal direction of this embodiment functions to cancel the unbalance. Thus, the leakage magnetic field to the surroundings can be reduced.

### (Fourth embodiment)

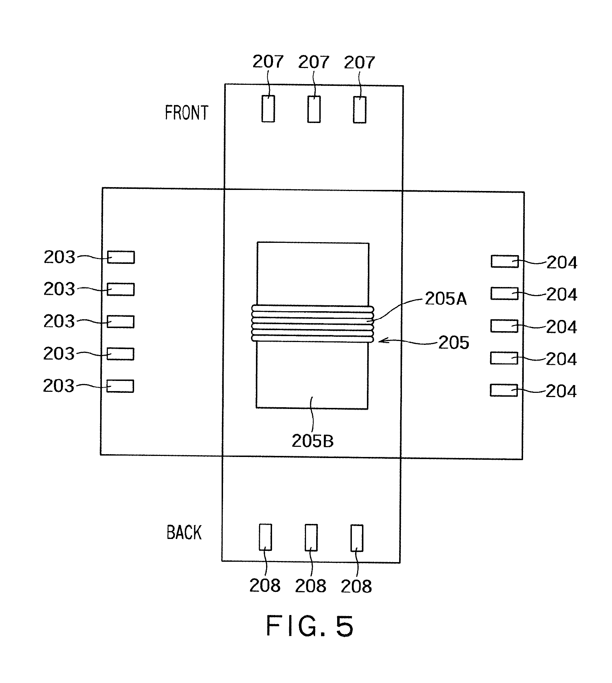

FIG. 5 illustrates a wireless power transmitting device including a leakage preventing device according to a fourth embodiment and a resonator. The resonator may be either primary resonator or secondary resonator. The same symbols are attached for the parts similar to FIG. 3 and redundant descriptions are omitted.

While there is one set of the conductive wires 207 and 208 in the third embodiment illustrated in FIG. 3, a plurality of sets are provided in this embodiment. Thus, short-circuit loops in the longitudinal direction are formed at different parts in the horizontal direction during the power transmission. Therefore, the magnetic fluxes for the unbalance at the different locations in the horizontal direction are canceled and the leakage magnetic field to the surroundings can be reduced further.

### (Fifth embodiment)

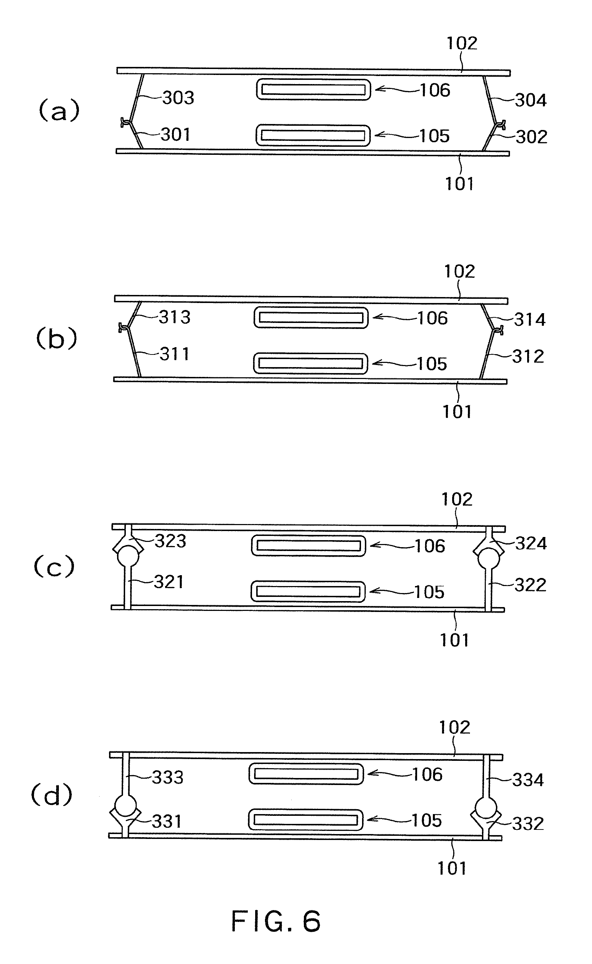

In FIG. 6(a), FIG. 6(b), FIG. 6(c) and FIG. 6(d), a front view of a wireless power transmission system including a leakage preventing device according to a fifth embodiment is illustrated. The same symbols are attached to elements corresponding to FIG. 1 and redundant descriptions are omitted. A modification of the conductive object in the first embodiment is illustrated in all of FIG. 6(a), FIG. 6(b), FIG. 6(c) and FIG. 6(d).

In a configuration of FIG. 6(a), one end of conductive wires 301 and 302 is connected respectively to the conductive plate 101 on the primary side, and a J-shaped hook-like part (hook part) is formed at the other end. One end of conductive wires 303 and 304 is also connected respectively to the conductive plate 102 on the secondary side and the J-shaped hook-like part (hook part) is formed at the other end. By locking the hook part at the other end of the conductive wires 301 and 302 rising from the conductive plate 101 on the primary side and the hook part at the other end of the conductive wires 303 and 304 suspended from the conductive plate 102 on the secondary side, the short-circuit loop is formed.

In a configuration of FIG. 6(b), lengths of the conductive wires on the primary side and the secondary side are different from that in FIG. 6(a). In FIG. 6(a), the conductive wire connected to the conductive plate 101 on the primary side is shorter than the conductive wire connected to the conductive plate 102 on the secondary side. In contrast, in this example, conductive wires 311 and 312 connected to the conductive plate 101 on the primary side are longer than conductive wires 313 and 314 connected to the conductive plate 102 on the secondary side.

In a configuration of FIG. 6(c), one end of conductive wires 321 and 322 is connected respectively to the conductive plate 101 on the primary side, and a spherical projection is formed at the other end. One end of conductive wires 323 and 324 is also connected respectively to the conductive plate 102 on the secondary side, and a semispherical recess to be engaged with the projection is formed at the other end.

By bringing the projections of the conductive wires 321 and 322 rising from the conductive plate 101 on the primary side and the recesses of the conductive wires 303 and 304 suspended from the conductive plate 102 on the secondary side into contact so as to be engaged, the short-circuit loop is formed.

In a configuration of FIG. 6(d), a relationship between the recesses and the projections formed at the conductive wires on the primary side and the secondary side is opposite to that in FIG. 6(c). In FIG. 6(c), the projection is formed at the other end of the conductive wire connected to the conductive plate 101 on the primary side and the recess is formed at the other end of the conductive wire connected to the conductive plate 102 on the secondary side. In contrast, in this example, the recess is formed at the other end of conductive wires 331 and 332 connected to the conductive plate 101 on the primary side, and the projection is formed at the other end of conductive wires 333 and 334 connected to the conductive plate 102 on the secondary side.

Regarding the configurations of FIG. 6(c) and FIG. 6(d), the need of determining the size of the projection to be about the same as an allowable range of displacement in all directions of a structure including the upper and lower resonators is generated. In contrast, in the configurations illustrated in FIG. 1(b) and FIG. 1(c) in the first embodiment, the conductor plate 101 or the conductor plate 102 is provided with an area corresponding to the allowable range of the displacement in all directions. Therefore, in the configurations of FIG. 1(b) and FIG. 1(c), there is an advantage that the configuration such as the size of the conductive wire is not greatly restricted.

### (Sixth embodiment)

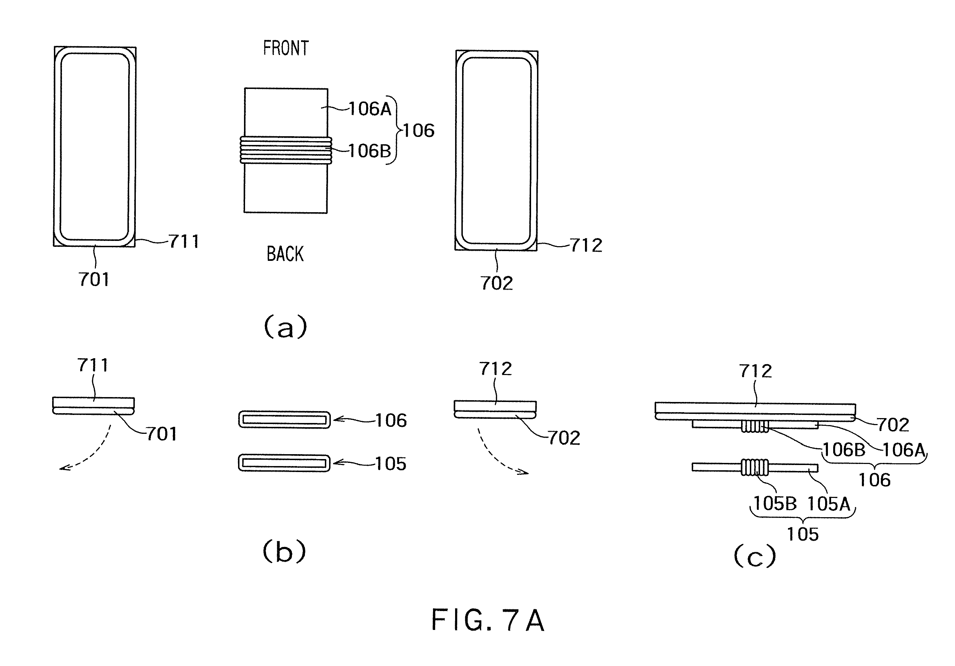

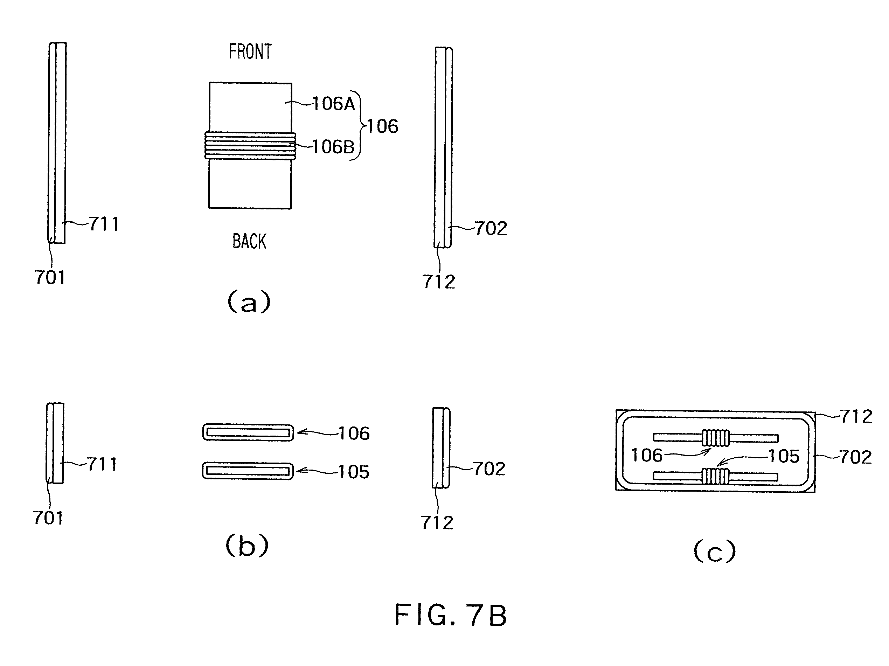

In FIG. 7A(a) and FIG. 7B(a), a top view of a wireless power transmitting device including a leakage preventing device according to a sixth embodiment and a secondary resonator is illustrated. A front view of a configuration in which a primary resonator is made to be opposed to the secondary resonator is illustrated in FIG. 7A(b) and FIG. 7B(b), and a side view of the configuration is illustrated in FIG. 7A(c) and FIG. 7B(c). FIGS. 7A(a)-(c) illustrate a state in non-use of this leakage preventing device, and FIGS. 7B(a)-(c) illustrate a state in use of this leakage preventing device. Hereinafter, the case that the secondary resonator and the leakage preventing device are disposed at the lower part of a vehicle or the like and the primary resonator is disposed on a parking surface will be assumed and described.

While a short-circuit loop is formed of a set of conductive wires and upper and lower conductive plates in the embodiments so far, in this embodiment, a conductive loop itself is disposed at a position away from a resonator pair. Thus, magnetic fluxes leaking from a certain specific position among positions surrounding the resonator pair can be canceled. Hereinafter, details of this embodiment will be described.

As illustrated in FIG. 7A(a), a conductor loop 701 is disposed away from the resonator 106 in a direction parallel to the width direction of the coil 106B of the secondary resonator 106. The conductor loop 701 is formed on a surface of a support 711. The support 711 may be constituted of a dielectric for instance.

Also, a conductor loop 721 is disposed away from the resonator 106 in a direction approximately opposite to the conductor loop 701. The conductor loop 721 is formed on a surface of a support 712. The support 712 may be constituted of a dielectric for instance.

The supports 711 and 712 have an approximately flat shape. Postures of the supports 711 and 712 are controllable. As indicated by broken lines in FIG. 7A(b), the postures are changeable so that loop surfaces of the conductor loops 701 and 702 is opposed to the resonator pair or a space between the resonators. The loop surface is a surface that coincides with an area on the inner side of the loop including the conductor loop.

During the time of non-use, the loops 701 and 702 and the supports 711 and 712 are housed in a form of being along the lower part of a vehicle or the like, and the loop surface and the surface of the magnetic core 106A are approximately parallel (FIG. 7A). During the time of use, as illustrated in FIG. 7B, the conductor loops 701 and 702 and the supports 711 and 712 thereof are suspended approximately vertically from a state of being approximately parallel to the surface of the magnetic core 106A. At the time, the conductor loops 701 and 702 and the supports 711 and 712 are disposed in a space between the lower part of the vehicle or the like and the parking surface, and the loop surfaces of the conductor loops 701 and 702 is perpendicular to the width direction of the coils of the respective resonators. At the time, when the wireless power transmission is performed from the primary resonator 105 to the secondary resonator 106, an induced current corresponding to the magnetic fluxes passing through the loops 701 and 702 flows in the loop so that the leakage of the magnetic fluxes to the outside from between the lower part of the vehicle and the parking surface can be reduced.

While two loops are provided in the example illustrated in FIG. 7A and FIG. 7B, just one loop may be provided.

Conversely, it is also possible to add loops to the front and back additionally to the loops illustrated in FIG. 7A and FIG. 7B. Or, it is possible to add loops to the front and back in addition to the left and right of the secondary resonator. Thus, the induced current corresponding to the magnetic fluxes passing through the added part flows and the magnetic fluxes can be canceled. Therefore, the leakage magnetic field to the surroundings can be reduced further.

### (Seventh embodiment)

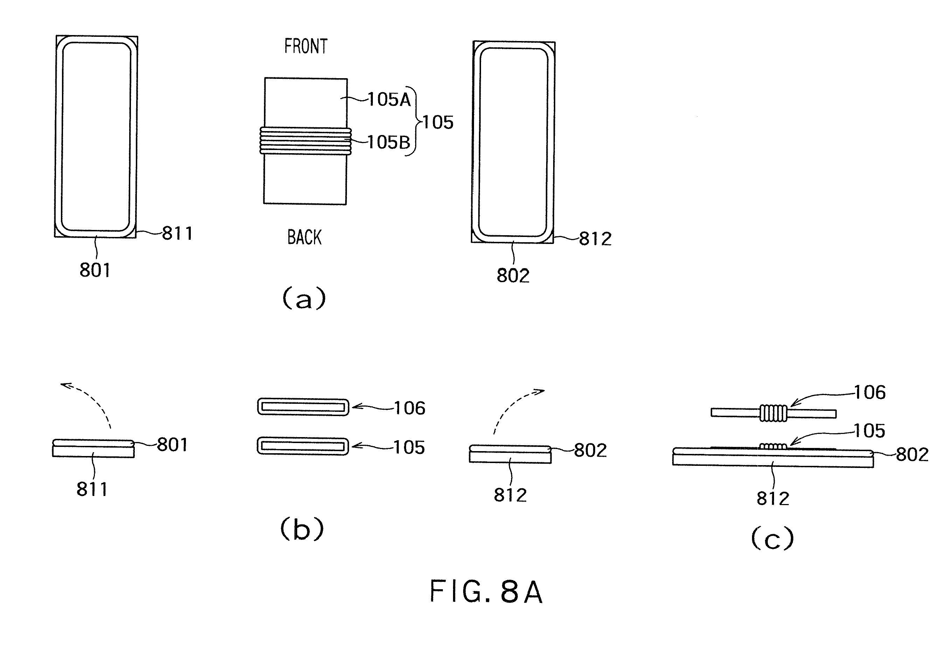

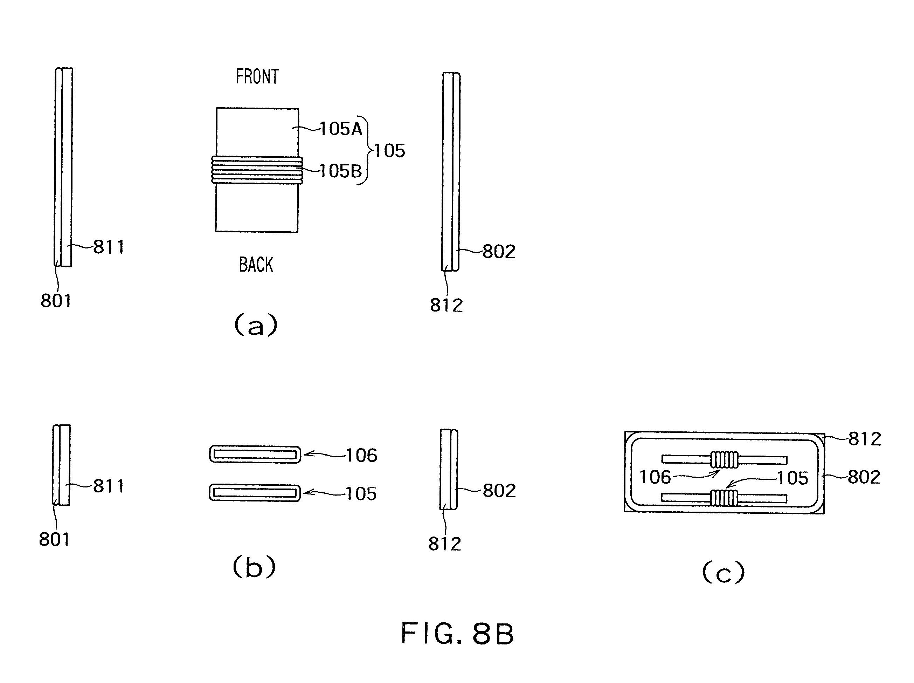

In FIG. 8A(a) and FIG. 8B(a), a top view of a wireless power transmitting device including a leakage preventing device according to a seventh embodiment and a primary resonator is illustrated. A front view of a configuration in which a secondary resonator is made to be opposed to the primary resonator is illustrated in FIG. 8A(b) and FIG. 8B(b), and a side view of the configuration is illustrated in FIG. 8A(c) and FIG. 8B(c). FIGS. 8A(a)-(c) illustrate a state in non-use of this leakage preventing device, and FIGS. 8B(a)-(c) illustrate a state in use of this leakage preventing device.

While the conductive loop and the support are disposed on the secondary side (vehicle or the like) in the sixth embodiment, in this embodiment, conductive loops 801 and 802 and supports 811 and 812 thereof are disposed on the primary (parking surface or the like). Otherwise, it is similar to the sixth embodiment.

During the time of non-use, as illustrated in FIG. 8A, the loop surfaces of the loops 801 and 802 are approximately parallel to the surface of the magnetic core 105A. For instance, the loops 801 and 802 and the supports 811 and 812 are housed in the form of being along the parking surface.

During the time of use, as illustrated in FIG. 8B, the conductive loops 801 and 802 and the supports 811 and 812 thereof are erected approximately vertically from a state of being parallel to the surface of the magnetic core 105A, and the respective loop surfaces of the conductor loops 801 and 802 is perpendicular to the width direction of the coil. When the wireless power transmission is performed from the primary resonator 105 to the secondary resonator 106 in the state, the induced current corresponding to the magnetic fluxes passing through the loops 801 and 802 flows in the loops so that the magnetic fluxes leaking to the outside can be reduced.

### (Eighth embodiment)

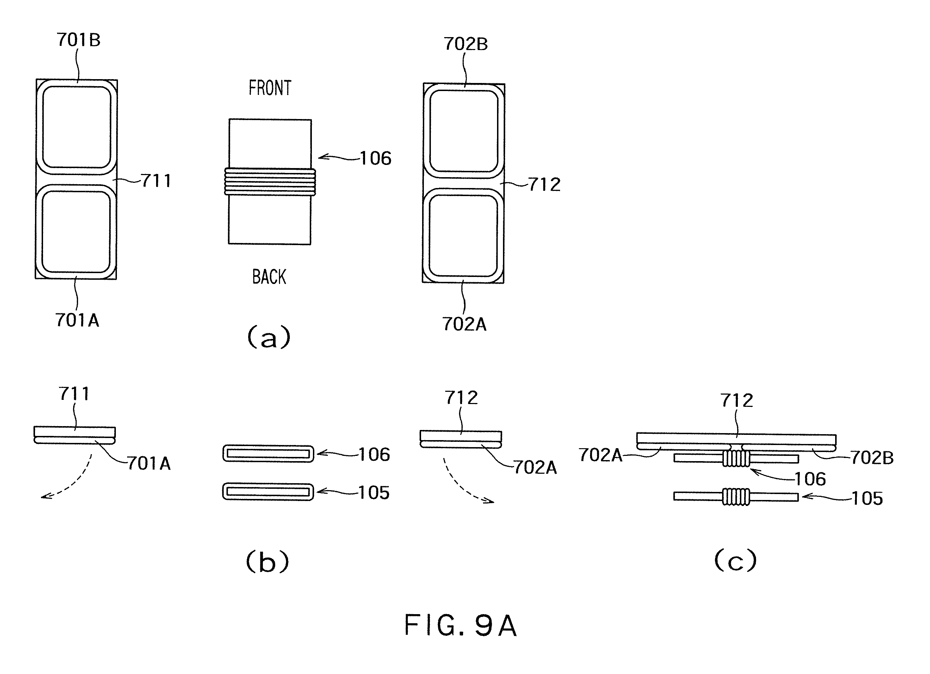

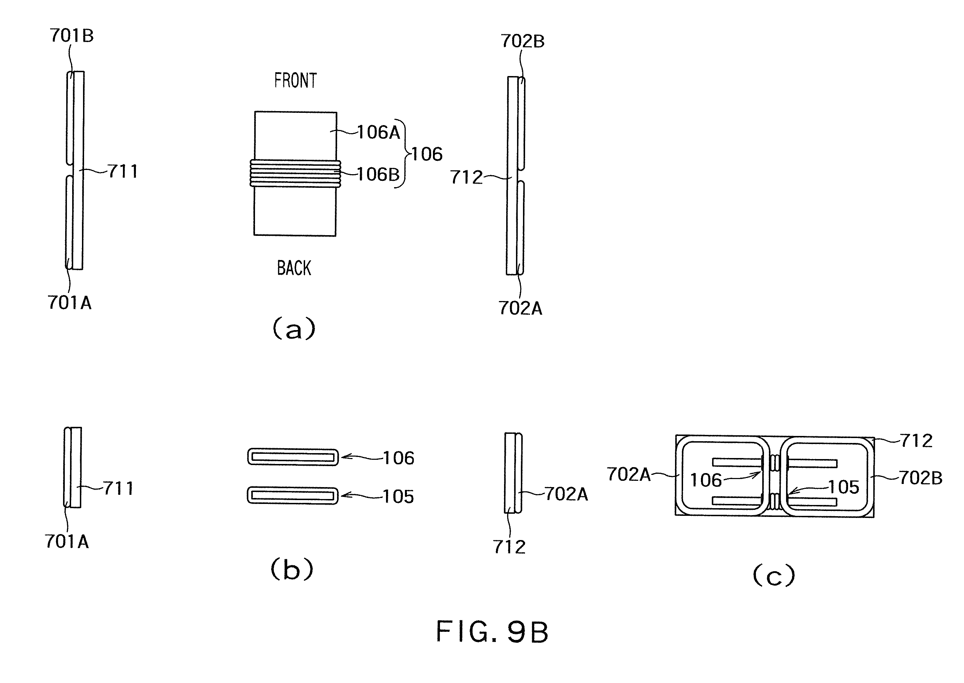

In FIG. 9A(a) and FIG. 9B(a), a top view of a wireless power transmitting device including a leakage preventing device according to an eighth embodiment and a secondary resonator is illustrated. A front view of a configuration in which a primary resonator is made to be opposed to the secondary resonator is illustrated in FIG. 9A(b) and FIG. 9B(b), and a side view of the configuration is illustrated in FIG. 9A(c) and FIG. 9B(c). FIGS. 9A(a)-(c) illustrate a state in non-use of this leakage preventing device, and FIGS. 9B(a)-(c) illustrate a state in use of this leakage preventing device. Hereinafter, the case that the secondary resonator and the leakage preventing device are disposed at the lower part of a vehicle or the like and the primary resonator is disposed on a parking surface will be assumed and described.

While a single conductor loop is disposed to a single support in the sixth embodiment illustrated in FIG. 7A and FIG. 7B, in this embodiment, a plurality of conductor loops are disposed to the single support. Specifically, the plurality of conductor loops 701A and 701B are disposed to the single support 711. The plurality of conductor loops 701A and 701B are disposed along a direction parallel to the length direction of the coil. Through the resonator 106, on the opposite side of the conductor loops 701A and 701B and the support 711, the plurality of conductor loops 711A and 711B are disposed to the single support 712. The conductor loops 711A and 711B are disposed along the direction parallel to the length direction of the coil.

In this configuration, compared to the sixth embodiment, the magnetic fluxes that cross the loops are reduced, and the induced current is reduced. Depending on transmission power between the resonators or the like, the flowing induced current becomes too big by the single loop and there is the need of increasing the thickness and conductivity of a conductor configuring the loop. In contrast, by the plurality of loops as in this embodiment, the limitation can be mitigated. However, since a gap is generated between the plurality of loops, the magnetic fluxes passing through the gap cannot be captured. Therefore, there is the case that a better effect can be obtained in the sixth embodiment.

While the leakage preventing device is disposed on the secondary side in this embodiment, the configuration of disposing it on the primary similarly to the seventh embodiment illustrated in FIG. 8A and FIG. 8B is also possible.

### (Ninth embodiment)

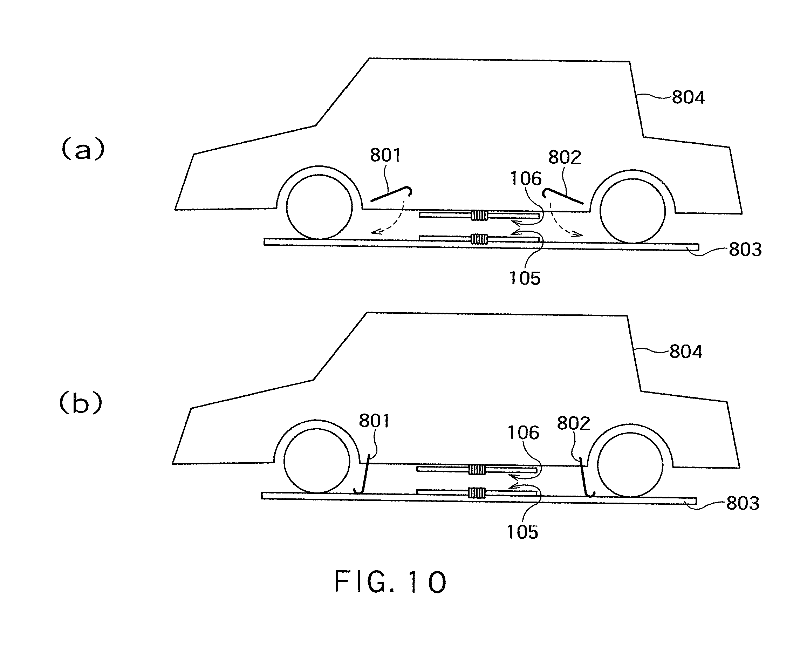

FIG. 10 illustrates a wireless power transmission system including a leakage preventing device according to a ninth embodiment. In this embodiment, when a vehicle body of a car or the like is constituted of a conductor, the conductor of the vehicle body, a metal plate (conductor plate) laid in a parking space, and two conductive wires are used to configure a short-circuit loop. A primary resonator is disposed on a parking surface, and a secondary resonator is disposed at the lower part of the vehicle body so as to be opposed to the primary resonator.

FIG. 10(a) illustrates a state in non-use of the leakage preventing device, and FIG. 10(b) illustrates a state in use of an electromagnetic wave leakage prevention function.

As illustrated in FIG. 10(a), during the time of non-use of the leakage preventing device, conductive wires 801 and 802 at two parts to be used for forming the short-circuit loop are housed at the lower part of a vehicle body 804. During the time of use of the leakage preventing device, as illustrated in FIG. 10(b), one ends of the conductive wires 801 and 802 at two parts are lowered to a metal plate 803 laid in the parking space and connected to the metal plate 803. Thus, by the conductive wires 801 and 802, the metal plate 803 and the conductor of the vehicle body, the short-circuit loop is formed so as to surround the periphery of the resonator pair. During the wireless power transmission, since the induced current according to the magnetic fluxes passing through the short-circuit loop flows, the leakage of the magnetic fluxes to the outside can be reduced.

Also, while the short-circuit loop is formed utilizing the conductor of the vehicle body in this embodiment, the configuration of separately disposing a metal plate on a lower surface of the vehicle body and utilizing it is also possible.

As a modification, the configuration of disposing the conductive wire along the parking surface, springing up (or rising up) one end from below and connecting it to the conductor of the vehicle body as in the first embodiment illustrated in FIG. 1(b) is also possible. Or, as in the fifth embodiment illustrated in FIG. 6, the configuration of installing the conductive wires to both of the vehicle body and the metal plate of the parking surface and connecting the one ends of both (the recess and the projection with each other, or the hook parts with each other) is also possible.

### (Tenth embodiment)

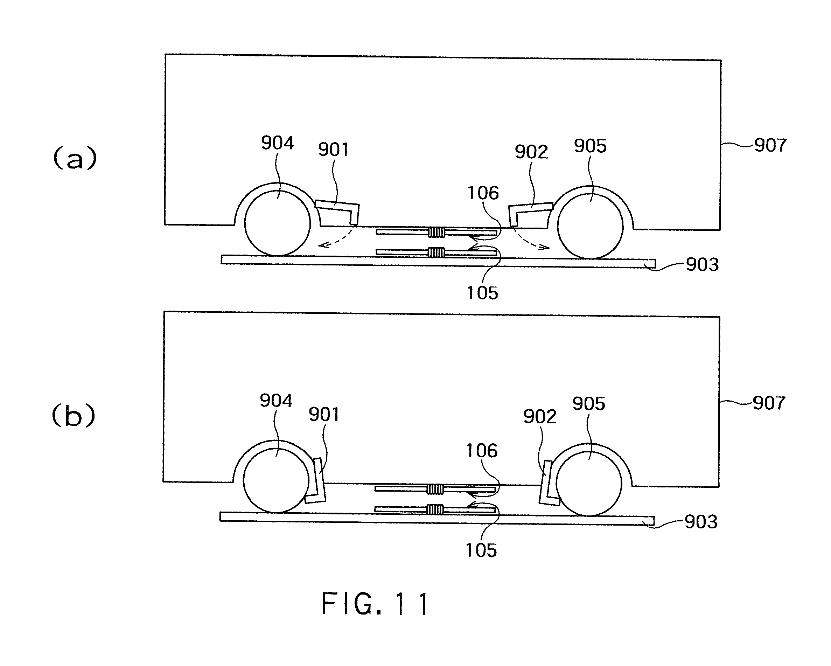

FIG. 11 illustrates a wireless power transmission system including a leakage preventing device according to a tenth embodiment. In this embodiment, when a vehicle body of a train or the like is constituted of a conductor and a wheel can be considered as a conductor in the view from transmission signals further (for instance, when a surface of the wheel is the conductor), the rail of the train, the wheel and conductive wires at two parts are used to configure a short-circuit loop. The primary resonator is disposed at the rail, and the secondary resonator is disposed at the lower part of the vehicle body of the train so as to be opposed to the primary resonator.

The vehicle can be an automobile or the like, not the train, as long as a conductor is formed in a circulating shape on the surface of a wheel, and in this case, a metal plate disposed on a parking surface may be used instead of the rail.

FIG. 11(a) illustrates a state in non-use of the leakage preventing device, and FIG. 11(b) illustrates a state in use of the leakage preventing device. As illustrated in FIG. 11(a), during the time of non-use of the leakage preventing device, conductive wires 901 and 902 at two parts to be used for forming the short-circuit loop are housed at the lower part of a vehicle body 907. During the time of use of the leakage preventing device, as illustrated in FIG. 11(b), one ends of the conductive wires 901 and 902 at two parts are lowered to wheels 904 and 905 and electrically connected to the surface of the wheels 904 and 905. At the time, by the wheels 904 and 905, the conductive wires 901 and 902, the rail and the vehicle body, the short-circuit loop is formed so as to surround the periphery of the resonator pair. During the wireless power transmission, since the induced current according to the magnetic fluxes passing through the short-circuit loop flows, the leakage of the magnetic fluxes to the outside can be reduced.

Also, a conductive shaft connecting conductive wheels with each other may be used instead of the rail to form the short-circuit loop. Also, the wheels to be utilized for forming the short-circuit loop may not be front and rear wheels of the train but may be left and right wheels.

In the above-described first to tenth embodiments, a monitor which monitors the induced current flowing in the short-circuit loop can be provided.

For instance, when the displacement in the upper and lower resonators is large, the monitor value becomes large. Then, by performing displacement correcting work while observing the monitor value, confirming that the monitor value has lowered, and ending the correction of the displacement, power efficiency can be improved more.

Also, when the monitor value is large, there is the case of exceeding the reference of electromagnetic field leakage. Then, by raising and lowering transmission power while observing the monitor value, larger power can be transmitted within the reference. Thus, charging time can be shortened.

Also, a cancellation current generator may be added to the short-circuit loop, and an additional current may be impressed further in addition to the induced current when the monitor value is large. Thus, the magnetic fluxes can be efficiently canceled.

In the above-described first to tenth embodiments, the induced current flows in the conductive objects and the conductor plates forming the short-circuit loop. Therefore, depending on a flowing current amount, there is the possibility of causing an electric shock or the like by a human body or the like being brought into contact when exposed. In order to prevent that, covering parts other than the part with the possibility of being in mutual contact with the conductive objects or the conductor plates with an insulator of a resin or rubber or the like may be taken into consideration.

### (Eleventh embodiment)

In this embodiment, differently from the embodiments so far, the configuration of preventing the leakage of the electromagnetic waves using a high permeability ferromagnetic material (ferrite or the like) which changes the flow of magnetic fluxes of two important magnetic shield methods in a low frequency magnetic area (near field) described in the descriptions of the first embodiment is illustrated.

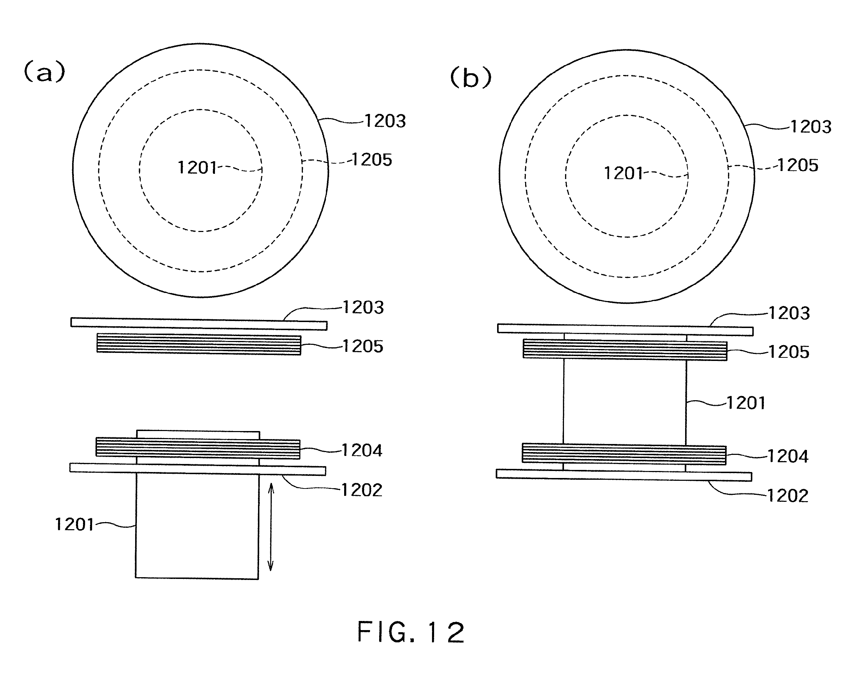

FIG. 12 illustrates a wireless power transmission system including the leakage preventing device according to an eleventh embodiment.

FIG. 12(a) illustrates a state in non-use of the leakage preventing device, and FIG. 12(b) illustrates a state in use of the leakage preventing device. Drawings on the upper side of FIG. 12(a) and FIG. 12(b) are top views and drawings on the lower side are side views.

Horizontally wound primary resonance coil 1204 and secondary 1205 are oppositely disposed. A conductive plate 1202 is disposed on the back surface side of the primary resonance coil 1204, and a conductive plate 1203 is disposed on the back surface side of the secondary resonance coil 1205. Also, on the primary side, a magnetic material block 1201 is disposed.

The magnetic material block 1201 has a columnar shape. On the conductor plate 1202 on the primary side, a hole that the magnetic material block 1201 passes through is formed. The hole of the conductor plate 1202 and a through-hole of the primary resonance coil 1204 are positioned, and the magnetic material block 1201 is capable of passing through the hole of the conductor plate 1202 and moving inside the primary resonance coil 1204. Further, when the secondary resonance coil 1205 is disposed to be opposed to the primary resonance coil 1204, the magnetic material block 1201 can be inserted also to the inside of the secondary resonance coil 1205. The magnetic material block 1201 may be moved by a mechanical, magnetic or electrical method. This leakage preventing device may include a moving unit for the magnetic material block 1201.

As illustrated in FIG. 12(a), during the time of non-use of the leakage preventing device, a large part of the magnetic material block 1201 is housed at the lower part of a parking surface, and a part passes through the primary resonance coil 1204 and enters a space between the resonators 1204 and 1205.

During the time of use of the leakage preventing device, as illustrated in FIG. 12(b), the magnetic material block 1201 is elevated so as to pass through the inside of the lower resonance coil 1204, the space between the resonators 1204 and 1205, and the inside of the resonance coil 1205, and the one end is brought into contact with the conductive plate 1203. In the state that the magnetic material block 1201 is elevated in such a manner, by transmitting power from the primary side to the secondary side, a large part of the magnetic fluxes flows in the magnetic material block 1201. Thus, the effective magnetic shielding is made possible. Also, in this case, the effects of improving a coupling coefficient between the upper and lower resonators 1204 and 1205 and also improving power transmission efficiency are generated. In addition to the magnetic shielding of the magnetic material block 1201, the leakage of the electromagnetic waves in the vertical direction of the resonator pair is prevented by the conductive plates 1203 and 1202 as well.

The magnetic material block does not always need to be present inside the upper and lower coils during the time of use, and when it is present in at least a part of the space between the upper and lower coils at least, the effect of preventing the electromagnetic wave leakage can be obtained. For instance, in the case that a cover is put on the resonator coil on the secondary side attached to the vehicle side or the like, even when the magnetic material block does not reach the inside of the coil inside the cover, it is sufficient when the magnetic material block is elevated to the surface of the cover or the vicinity thereof. Since a large part of the magnetic fluxes intensively flows in the magnetic material block to the upper end of the magnetic material block, a magnetic shielding effect is generated. Also, the magnetic material block may be shortened such that the magnetic material block is not present inside the upper and lower coils and the magnetic material block is present only in the space between the upper and lower coils.

That is, the magnetic material block is moved so as to increase an area occupied in the space between the resonators during the time of use rather than during the time of non-use. Thus, the magnetic material block is prevented from significantly projecting from the parking surface and getting broken during the time of non-use, and it is projected from the parking surface to dispose more part in the space between the resonators during the time of use, thereby sufficiently demonstrating a magnetic shielding function.

While the magnetic material block is disposed on the primary side in the above-described example, it may be disposed on the secondary side. Or, the magnetic material block may be disposed on both of the primary side and the secondary side, and in this case, during the time of use, both magnetic material blocks are moved inside the coil on the primary side and the coil on the secondary side and sent out to the space between the coils.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A leakage preventing device of electromagnetic wave for a first resonator to perform wireless power transmission with a second resonator disposed so as to be opposed to the first resonator, the first resonator including a first magnetic material and a first coil wound around the first magnetic material, comprising:
a first conductor plate provided on a first side of the first resonator, the first side being an opposite side of a second side of the first resonator where the first resonator is opposed to the second resonator; and
first and second conductive objects configured to be electrically connectable to the first conductor plate at first ends and electrically connectable to a second conductor plate at second ends respectively, the second conductor plate being provided on a third side of the second resonator, the third side being an opposite side of a fourth side of the second resonator where the second resonator is opposed to the first resonator, wherein the first and second conductive objects form a conductive loop surrounding a periphery of the first and second resonators together with the first conductor plate and the second conductor plate when the first ends are electrically connected to the first conductor plate and the second ends are electrically connected to the second conductor plate.

2. The device according to claim 1, wherein
the first ends of the first conductive object and the second conductive object are fixedly connected to the first conductor plate, and
the second ends of the first conductive object and the second conductive object are connectable and separable to/from the second conductor plate.

3. The device according to claim 1 or 2, wherein
the first conductive object is disposed away from the first resonator in a direction parallel to a width direction of the first coil, and
the second conductive object is disposed away from the first resonator in a direction approximately opposite to the direction in which the first conductive object is away from the first resonator.

4. The device according to claim 1 or 2, wherein
the first conductive object is disposed away from the first resonator in a direction parallel to a length direction of the first coil, and
the second conductive object is disposed away from the first resonator in a direction approximately opposite to the direction in which the first conductive object is away from the first resonator.

5. The device according to any one of claims 1 to 4, comprising
a plurality of sets of the first conductive object and the second conductive object.

6. The device according to any one of claims 1 to 5, wherein
the second end of the first conductive object is configured to be connectable with a first end of a third conductive object a second end of which is connected to the second conductor plate, and
the second end of the second conductive object is configured to be connectable with a first end of a fourth conductive object a first end of which is connected to the second conductor plate.

7. The device according to claim 6,
wherein a projection or a recess is formed at each of the second ends of the first and second conductive objects, and the projection or the recess is connectable with a recess or a projection formed at each of the first ends of the third and fourth conductive objects.

8. The device according to claim 6,
wherein a hook part is formed at each of the second ends of the first and second conductive objects, and the hook part is lockable with a hook part formed at each of the first ends of the third and fourth conductive objects.

9. The device according to any one of claims 1 to 8, wherein
the first conductive plate, the first conductive object and the second conductive object are disposed at a lower part of a vehicle, and
the second ends of the first conductive object and the second conductive object are configured to be connectable to the second conductive plate disposed on a parking surface.

10. The device according to any one of claims 1 to 8, wherein
the first conductive plate, the first conductive object and the second conductive object are disposed on the parking surface, and
the second ends of the first conductive object and the second conductive object are configured to be connectable to the second conductive plate disposed at the lower part of a vehicle on the parking surface.

11. The device according to claim 9 or 10,
wherein the first conductive plate forms a part of a vehicle body of the vehicle.

12. The device according to any one of claims 1 to 8, wherein
the first conductive plate, the first conductive object and the second conductive object are disposed at a lower part of a train present on a rail, and
the second ends of the first conductive object and the second conductive object are configured to be connectable to surfaces of front and rear wheels of the train, or left and right wheels of the train, respectively.

13. The device according to claim 12,
wherein the first conductive plate forms a part of a vehicle body of the train.

14. A leakage preventing device of electromagnetic wave for a first resonator to perform wireless power transmission with a second resonator disposed so as to be opposed to the first resonator, the first resonator including a first magnetic material and a first coil wound around the first magnetic material, comprising:
a first conductive loop part a loop surface of which is opposed to the first resonator and the second resonator, away in a direction perpendicular to a direction in which the first resonator and the second resonator are opposed to each other.

15. The device according to claim 14, further comprising
a second conductive loop part a loop surface of which is opposed to the first resonator and the second resonator, away in a direction approximately opposite to the direction in which the first conductive loop part is away from the first resonator and the second resonator.

16. The device according to claim 14 or 15,
wherein one of the first resonator and the second resonator is disposed at the lower part of a vehicle, the other one is disposed on a parking surface, and the first conductive loop part is disposed so as to be opposed to the first and second resonators between the lower part of the vehicle and the parking surface.

17. The device according to claim 14 or 15,
wherein the first conductive loop part is disposed in a way that a loop surface thereof is along a lower part of a vehicle, and
the first conductive loop part is sent out from the lower part of the vehicle so that the loop surface is opposed to the first and second resonators between the lower part of the vehicle and a parking surface.

18. The device according to claim 14 or 15,
wherein the first conductive loop part is disposed in a way that a loop surface is along a parking surface, and
the first conductive loop part is sent out from the parking surface so that the loop surface is opposed to the first and second resonators between a lower part of the vehicle and the parking surface.

19. The device according to any one of claims 14 to 18, wherein the plurality of first conductive loop parts are disposed along a direction parallel to the length direction of the first coil.

20. A leakage preventing device of electromagnetic wave for wireless power transmission between first and second coils disposed to be opposed to each other, comprising:
a magnetic material block movable inside the first coil or the second coil, wherein the magnetic material block is disposed so as to occupy at least a part of a space between the first coil and the second coil during wireless power transmission, and is moved to an inside of the first coil or the second coil during non-wireless power transmission so as to reduce an area occupied in the space compared to a time of the wireless power transmission.
